# EUROPÄISCHE PATENTSCHRIFT

(11) **EP 3 896 014 B1**
(45) Veröffentlichungstag und Bekanntmachung des Hinweises auf die Patenterteilung: **01.02.2023**
(21) Anmeldenummer: 21161217.1
(22) Anmeldetag: 08.03.2021
(51) Int. Cl.: B65G 47/71, B65G 47/68

(54) **TRANSPORTVORRICHTUNG FÜR ARTIKEL UND VERFAHREN ZUM TRANSPORTIEREN VON ARTIKELN**
TRANSPORT DEVICE FOR ITEMS AND METHOD FOR TRANSPORTING ITEMS
DISPOSITIF DE TRANSPORT POUR ARTICLES ET PROCÉDÉ DE TRANSPORT DES ARTICLES

(30) Priorität: 17.04.2020 DE 102020110505
(43) Veröffentlichungstag der Anmeldung: 20.10.2021
(73) Patentinhaber: KRONES Aktiengesellschaft, 93073 Neutraubling (DE)
(72) Erfinder: MAYER, Josef, 93073 Neutraubling (DE); SEMMELROCK, Albin, 93073 Neutraubling (DE)
(74) Vertreter: Benninger, Johannes

(56) Entgegenhaltungen:
- EP-A1- 3 208 783
- DE-A1- 3 613 724
- DE-C1- 4 337 646
- DE-U1- 9 209 732
- FR-A1- 2 548 638
- FR-A1- 2 907 437
- JP-A- H04 345 425
- US-A- 4 173 276

## Beschreibung

Die vorliegende Erfindung betrifft eine Transportvorrichtung für Artikel sowie ein Verfahren zum Transportieren von Artikeln.

In einigen Bereichen der Förder- und Automatisierungstechnik ist eine Vielzahl gleichartiger Artikel zu handhaben. Dies trifft etwa in der Automatisierungstechnik für die Lebensmittel- und Getränkeindustrie und/oder in der Verpackungstechnik und in der Verpackungsindustrie zu, wo es üblich ist, für immer wiederkehrende Vorgänge eigens hierfür konstruierte Vorrichtungen zum Umgang mit den zu handhabenden Artikeln einzusetzen.

Bei den Artikeln kann es sich beispielsweise um Objekte wie etwa verpackte oder unverpackte Gegenstände oder Behälter oder um Gebinde aus mehreren Objekten handeln, wobei die Objekte eines Gebindes beispielsweise mittels einer Umreifung, einer Umverpackung, wie etwa einer Umwickelung, einem Schrumpfschlauch oder einem Karton oder einem Tragegestell zusammengehalten werden, um nur einige denkbare Ausgestaltungen zu nennen.

Vorteilhaft werden Artikel in einem Artikelstrom aus jeweils geordnet nacheinander beispielsweise ununterbrochenen unmittelbar aufeinander folgend transportierten Artikeln einem vorzunehmenden Umgang zugeführt oder von einem vorgenommenen Umgang abtransportiert.

Um innerhalb möglichst kurzer Zeit mit möglichst vielen Artikeln umgehen zu können, ist es bekannt, die Artikel in mehreren durch seitliche Begrenzungen in ihrer Weite an die Breite der Artikel angepassten, parallel verlaufenden Gassen geführten Artikelströmen zu transportieren.

Durch das Dokument DE 33 36 988 C2 ist eine Transportvorrichtung mit mehreren parallel verlaufenden Gassen bekannt. Jede Gasse verfügt über eine durch ein eigenes Förderband gebildete Transportspur. Die beiden äußeren Gassen sind nach außen hin durch zwei an gegenüberliegenden Längsseiten gestellfest angeordnete äußere Führungsgeländer begrenzt. Kurz als Gassenbleche bezeichnete, innere Führungsgeländer begrenzen die Gassen nach innen, zur Mitte der Transportvorrichtung hin. Die Gassen links der Mitte sind dadurch links außen durch das äußere Führungsgeländer und zur Mitte hin durch jeweils einseitig rechts deren Transportspuren angeordnete Gassenbleche voneinander abgegrenzt. Die Gassen rechts der Mitte sind demgegenüber rechts außen durch das äußere Führungsgeländer und zur Mitte hin durch jeweils einseitig links deren Transportspuren angeordnete Gassenbleche voneinander abgegrenzt. Die Förderbänder sind über die Breite der Transportvorrichtung zwischen den äußeren Führungsgeländern hinweg unabhängig voneinander frei verschiebbar angeordnet.

Die DE 195 14 928 A1 offenbart ein Verfahren zum Beschicken einer Gassenverteilung für Gefäße. Die Gefäße werden bei dem Verfahren durch einen Zuförderer zugeführt und von diesem rechtwinklig auf einen der Gassenverteilung vorgeschalteten Drängeltisch umgelenkt. Das Verfahren sieht eine aktive Steuerung der Bewegung der Gefäße vom Zuförderer zu den Gassen in Abhängigkeit vom Belegungszustand des Drängeltisches oder der Gassen vor. Wahlweise kann auch eine Bewegung der Gefäße auf dem Drängeltisch aktiv gesteuert werden. Vom Drängeltisch werden die Gefäße mit leichtem Staudruck in etwa gleichmäßig auf die mehreren Gassen der Gassenverteilung aufgeteilt, was durch Vibratoren an den Führungsschienen, eine leichte quer- oder Längsbewegung der Führungsschienen oder durch zusätzliche Einweiselemente unterstützt werden soll.

Eine Beschickung eines Gassentransports mit zuvor im Massentransport beförderten Flaschen ist zudem in der US 5 768 860 A offenbart. Sobald mittels Detektoren eine Stauung im Flaschentransport erkannt wird, werden seitliche Leitbleche im Bereich des Massentransports zueinander oder auseinander bewegt, was auftretende Stauungen auflösen soll.

Die DE 699 00 132 T2 offenbart eine Transportvorrichtung für Behälter wie Flaschen, die in voneinander mittels Seitenführungen getrennten Reihen befördert werden sollen. Im Bereich einer Zwischenführung ist eine schwenkbar bewegliche Klappe angeordnet. Sobald eine Unterbrechung im Behälterstrom detektiert wird, wird die bewegliche Klappe verschwenkt oder verdreht, um auf diese Weise Stauungen im Behälterstrom, die sich stromaufwärts der Zwischenführung gebildet haben, zu beseitigen.

Zudem beschreibt die EP 2 479 123 A1 eine Vorrichtung sowie ein Verfahren zum Transport von Artikeln in einem Massenstrom in Richtung eines Trennelements oder mehrerer Trennelemente zur Aufteilung des Massenstroms in mehrere Gassen. In einem Trennbereich ist eine Erfassungsvorrichtung angeordnet, die Störungen im Artikelstrom erkennen kann. Eine mit der Erfassungsvorrichtung gekoppelte Handhabungsvorrichtung ist in der Lage, einzelne Artikel, die solche Störungen verursacht haben, entweder zu entfernen oder ihre Positionierung zu korrigieren. Die Erfassungsvorrichtung kann insbesondere einen optischen Sensor oder mehrere optische Sensoren umfassen. Die Handhabungsvorrichtung kann mindestens ein Greifmittel für die Artikel umfassen und kann bspw. durch einen Portalroboter gebildet sein.

Ein weiteres System ist aus der US 4 173 276 A bekannt, welche den Oberbegriff des Anspruchs 1 zeigt.

Wie es die bekannten Verfahren und Vorrichtungen bereits erkennen lassen, kann es insbesondere im Bereich von freien Enden der Gassenbleche oder anderer Führungswände leicht vorkommen, dass sich Getränkebehälter ungewollt stauen, so dass der kontinuierliche Artikelstrom hierdurch zumindest bereichsweise unterbrochen wird. Tritt eine solche Stauung auf, so können die jeweiligen Getränkebehälter bspw. durch manuellen Eingriff aus dem Artikelstrom entfernt werden. Hierzu muss die Transportvorrichtung jedoch angehalten werden, was wiederum den mit der Transportvorrichtung erzielbaren Durchsatz vermindert. Auch ist ein personeller Aufwand erforderlich, um die jeweilige Stauung zu beseitigen. Wird eine Stauung nicht bemerkt, so kann es sein, dass ein nachfolgender für die Artikel vorgesehener Umgang bzw. ggf. ein nachfolgender für die als Getränkebehälter ausgebildeten Artikel vorgesehener Verpackungsprozess fehlerhaft ist oder mit weiteren Problemen behaftet ist.

In einer Weiterentwicklung kann bspw. gemäß der EP 2 479 123 A1 anstelle eines manuellen Eingriffs eine Handhabungseinrichtung, gebildet bspw. durch einen Portalroboter, in den Artikelstrom eingreifen und für eine Beseitigung einer sensorisch erkannten Störung sorgen, was jedoch einen vergleichsweise hohen sensorischen und maschinellen Aufwand erfordert, um auch bei einem Artikeltransport mit hohen Transportgeschwindigkeiten für eine schnelle und zuverlässige Beseitigung aller auftretenden Störungen zu sorgen.

Eine Aufgabe der vorliegenden Erfindung besteht daher darin, eine gattungsgemäße Transportvorrichtung sowie ein entsprechendes Verfahren bereitzustellen, mit welchen sich auf einfache Art und Weise ein Risiko einer ungewollten Stauung von Artikeln bei einer Zuführung in Gassen vermeiden lässt.

Die Aufgabe der Erfindung wird mit den Gegenständen gelöst, welche die Merkmale in den unabhängigen Ansprüchen umfassen. Weitere Ausführungsformen werden durch die abhängigen Ansprüche beschrieben.

Die Erfindung betrifft eine Transportvorrichtung für Artikel wie Getränkebehälter oder dergleichen. Die Getränkebehälter können beispielsweise durch Getränkeflaschen bzw. PET-Getränkeflaschen, aber auch durch Dosen gebildet sein. Insbesondere können die Artikel durch Behälter oder Dosen mit zylindrischen oder abschnittsweise zylindrischen Mantelflächen gebildet sein, die normalerweise im aufrecht stehenden Zustand transportiert werden. Die Transportvorrichtung umfasst einen ersten Transportabschnitt, der zur Bewegung von Artikeln im ungeordneten Massenstrom ausgebildet ist.

Dieser erste Transportabschnitt, auf dem die Artikel im ungeordneten Massenstrom transportiert werden, kann mindestens eine Horizontalfördereinrichtung umfassen. Die mindestens eine Horizontalfördereinrichtung kann etwa durch mindestens ein umlaufendes Transportband ausgebildet sein oder ein solches umlaufendes Transportband umfassen. Die Umlaufrichtung der Horizontalfördereinrichtung oder des umlaufenden Transportbandes definiert gleichzeitig eine Transportrichtung der Artikel bzw. des Massenstroms.

Weiter umfasst die Transportvorrichtung einen zweiten Transportabschnitt, der sich in Transportrichtung, d.h. in Bewegungsrichtung der Artikel an den ersten Transportabschnitt anschließt und mehrere Führungen oder Längsführungen umfasst, die quer zur Transportrichtung voneinander beabstandet sind und solchermaßen mehrere Gassen zwischen sich ausbilden, in welchen die bis dahin im ungeordneten Massenstrom bewegten Artikel in mehreren vorzugsweise parallelen Reihen geführt werden können.

Auch der zweite Transportabschnitt kann mindestens eine Horizontalfördereinrichtung bzw. mindestens eine weitere Horizontalfördereinrichtung zur Bewegung der Artikel in den mehreren vorzugsweise parallel zueinander orientierten Reihen umfassen. Auch kann die mindestens eine Horizontalfördereinrichtung des zweiten Transportabschnittes bzw. die mindestens eine weitere Horizontalfördereinrichtung durch mindestens ein umlaufendes Transportband ausgebildet sein.

Wahlweise kann die Horizontalfördereinrichtung des ersten Transportabschnittes und des zweiten Transportabschnittes auch dieselbe sein, gebildet bspw. durch ein einziges umlaufendes Transportband, das sich über den ersten Transportabschnitt und den zweiten Transportabschnitt erstreckt.

Es ist vorgesehen, dass mindestens einer der mehreren Längsführungen wenigstens zwei zur Einweisung von Artikeln in Gassen vorgesehene Rollen zugeordnet sind, die jeweils im Bereich eines in Richtung des ersten Transportabschnittes weisenden Endes der jeweiligen Längsführung angeordnet sind und jeweils an wenigstens einem gemeinsamen Mitnehmer befestigt und insbesondere drehbeweglich gelagert sind. Auch der wenigstens eine gemeinsame Mitnehmer ist drehbeweglich gelagert, und zwar an oder im Bereich der Längsführung.

Der Begriff der Rolle ist soll im vorliegenden Zusammenhang breit und umfassend verstanden werden, so dass der Begriff der Rolle etwa ein Element mit zylindrischer Geometrie umfassen soll, welches drehbeweglich oder auch drehfest an dem wenigstens einen gemeinsamen Mitnehmer angeordnet sein kann.

Außerdem kann es von Vorteil sein, wenn die wenigstens zwei zur Einweisung von Artikeln in Gassen vorgesehenen Rollen um ihre jeweiligen Längsachsen rotierbar an dem wenigstens einen gemeinsamen Mitnehmer befestigt oder gelagert sind. Derartige Ausführungsformen haben sich bewährt, um einen mit der jeweiligen Rolle in Oberflächenkontakt tretenden Artikel mit hoher Prozesssicherheit in seine jeweilige Gasse oder in eine von zwei Gassen einweisen zu können, ohne dass der jeweilige Artikel hierbei kippt oder sich stirnseitig an der Längsführung staut.

Auch kann die Transportvorrichtung in einer Weise ausgebildet sein, dass an der jeweiligen Längsführung im Bereich eines Übergangs vom ersten zum zweiten Transportabschnitt ein erster oberer gemeinsamer Mitnehmer sowie ein zweiter unterer gemeinsamer Mitnehmer angeordnet sind, die relativ zueinander gedreht werden können, wobei die wenigstens zwei zur Einweisung von Artikeln in Gassen vorgesehenen Rollen an dem oberen gemeinsamen Mitnehmer und an dem unteren gemeinsamen Mitnehmer derart befestigt sind, dass die wenigstens zwei zur Einweisung von Artikeln in Gassen vorgesehenen Rollen mittels einer relativen Drehbewegung des oberen gemeinsamen Mitnehmers gegenüber dem unteren gemeinsamen Mitnehmer aus einer parallelen oder im Wesentlichen parallelen Orientierung schräg zueinander anstellbar sind.

Weiter können der obere gemeinsame Mitnehmer und der untere gemeinsame Mitnehmer jeweils drehbeweglich gelagert sein. Eine Drehachse des oberen gemeinsamen Mitnehmers und eine Drehachse des unteren gemeinsamen Mitnehmers können miteinander fluchten oder parallel zueinander verlaufen.

So haben sich Ausführungsformen bewährt, bei welchen der obere gemeinsame Mitnehmer und der untere gemeinsame Mitnehmer jeweils derart drehbeweglich gelagert sind, dass dem oberen gemeinsamen Mitnehmer und dem unteren gemeinsamen Mitnehmer mindestens eine gemeinsame Drehachse zugeordnet ist/sind, um welche der obere gemeinsame Mitnehmer und der untere gemeinsame Mitnehmer relativ zueinander verdreht werden können. Sofern die wenigstens zwei zur Einweisung von Artikeln in Gassen vorgesehenen Rollen um ihre jeweilige Längsachse rotierbar sind und in einer parallelen Orientierung befinden, kann sich die gemeinsame Drehachse des oberen gemeinsamen Mitnehmers und des unteren gemeinsamen Mitnehmers zwischen den jeweiligen Längsachsen befinden und parallel zu den Längsachsen verlaufen.

Auch kann es sein, dass das in Richtung des ersten Transportabschnittes weisende Ende der mindestens einen Führung oder Längsführung eine sich in Richtung des ersten Transportabschnittes verjüngende Spitze ausbildet, wobei die wenigstens zwei zur Einweisung von Artikeln vorgesehenen Rollen im Bereich eines Endes der sich in Richtung des ersten Transportabschnittes verjüngenden Spitze angeordnet sind.

Denkbar ist auch, dass die wenigstens zwei zur Einweisung von Artikeln vorgesehenen Rollen an einer Befestigungsstruktur angeordnet sind, welche ein oberes Befestigungselement, ein unteres Befestigungselement und mehrere Stützstreben umfasst, welche das obere Befestigungselement und das untere Befestigungselement miteinander verbinden. Das obere Befestigungselement und das untere Befestigungselement können hierbei die sich in Richtung des ersten Transportabschnittes verjüngende Spitze ausbilden, an dessen Ende die wenigstens zwei zur Einweisung von Artikeln vorgesehenen Rollen angeordnet sind.

Vorstellbar ist es außerdem, dass mindestens einer der mehreren Längsführungen drei oder mehr als drei zur Einweisung von Artikeln in Gassen vorgesehene Rollen zugeordnet sind, die jeweils im Bereich eines in Richtung des ersten Transportabschnittes weisenden Endes der jeweiligen Führung angeordnet sind und jeweils an wenigstens einem gemeinsamen Mitnehmer befestigt sind, welcher wenigstens eine gemeinsame Mitnehmer drehbeweglich gelagert ist.

Bei einer solchen Ausgestaltung ist es vorstellbar, dass die drei oder mehr als drei zur Einweisung von Artikeln in Gassen vorgesehenen Rollen jeweils um ihre jeweilige Längsachse rotierbar sind. Es kann sein, dass die Transportvorrichtung einen ersten oberen gemeinsamen Mitnehmer und einen zweiten unteren gemeinsamen Mitnehmer umfasst, die relativ zueinander gedreht werden können, wobei die drei oder mehr als drei zur Einweisung von Artikeln in Gassen vorgesehenen Rollen an dem oberen gemeinsamen Mitnehmer und an dem unteren gemeinsamen Mitnehmer derart befestigt sind, dass die drei oder mehr als drei zur Einweisung von Artikeln in Gassen vorgesehenen Rollen mittels einer relativen Drehbewegung des oberen gemeinsamen Mitnehmers gegenüber dem unteren gemeinsamen Mitnehmer aus einer parallelen oder im Wesentlichen parallelen Orientierung schräg zueinander anstellbar sind.

Die Erfindung betrifft zudem ein Verfahren zum Transportieren von Artikel wie Getränkebehälter o. dgl. Die Schritte des erfindungsgemäßen Verfahrens und der nachfolgend beschriebenen Ausführungsformen können insbesondere mittels der vorhergehend bereits beschriebenen Ausführungsformen einer Transportvorrichtung umgesetzt werden. Auch kann die Transportvorrichtung zur Durchführung der nachfolgend beschriebenen Ausführungsformen des Verfahrens ausgebildet sein.

Bei dem Verfahren sind mehrere Führungen oder Längsführungen vorgesehen, die zwischen sich mehrere Gassen zur mehrreihigen Bewegung von Artikel ausbilden. Das Verfahren umfasst zumindest die folgenden Schritte:
- Bewegen von Artikeln im ungeordneten Massenstrom und
- Zuführen der bis dahin im ungeordneten Massenstrom bewegten Artikel an die mehreren Gassen sowie hierauf folgend Bewegen der zugeführten Artikel in den mehreren Gassen in mehreren vorzugsweise parallelen Reihen.
- Weiter ist vorgesehen, dass sich im Bereich eines Endes mindestens einer der mehreren Längsführungen wenigstens zwei Rollen befinden, die an wenigstens einem gemeinsamen Mitnehmer befestigt sind, welcher wenigstens eine gemeinsame Mitnehmer drehbeweglich gelagert ist, wobei ein dahin noch im ungeordneten Massenstrom bewegter Artikel mit mindestens einer Rolle der wenigstens zwei Rollen in Oberflächenkontakt gelangt, wodurch wenigstens eine gemeinsame Mitnehmer zusammen mit den wenigstens zwei Rollen gedreht wird und der jeweilige Artikel unter Oberflächenkontakt mit der mindestens einen Rolle in eine jeweilige Gasse eingewiesen werden.

In diversen Ausführungsformen kann es sein, dass der bis dahin noch im ungeordneten Massenstrom bewegte Artikel mit mindestens einer Rolle der wenigstens zwei Rollen in Oberflächenkontakt gelangt, wodurch der wenigstens eine gemeinsame Mitnehmer zusammen mit den wenigstens zwei Rollen gedreht wird, zudem die mindestens eine Rolle der wenigstens zwei Rollen um ihre Längsachse rotierend bewegt wird und der jeweilige Artikel unter Oberflächenkontakt mit der mindestens einen Rolle in eine jeweilige Gasse eingewiesen wird.

Weiter kann es sein, dass der bis dahin noch im ungeordneten Massenstrom bewegte Artikel mit mindestens einer Rolle der wenigstens zwei Rollen in Oberflächenkontakt gelangt, wodurch der wenigstens eine gemeinsame Mitnehmer zusammen mit den wenigstens zwei Rollen gedreht wird, woraus resultierend die wenigstens zwei Rollen ausgehend von einer parallelen oder einer im Wesentlichen parallelen Orientierung schräg zueinander angestellt werden und der jeweilige Artikel unter Oberflächenkotankt mit der mindestens einen schräg angestellten Rolle in eine jeweilige Gasse eingewiesen wird.

Denkbar ist zudem, dass sich im Bereich eines Endes mindestens einer Führung der mehreren Führungen wenigstens drei Rollen befinden, die an wenigstens einem gemeinsamen Mitnehmer befestigt sind, wobei ein bis dahin noch im ungeordneten Massenstrom bewegter Artikel mit mindestens einer Rolle der wenigstens drei Rollen in Oberflächenkontakt gelangt, wodurch der gemeinsame Mitnehmer zusammen mit den wenigstens drei Rollen gedreht wird und der jeweilige Artikel unter Oberflächenkontakt mit der mindestens einen Rolle in eine jeweilige Gasse eingewiesen wird.

Es sei an dieser Stelle ausdrücklich erwähnt, dass alle Aspekte und Ausführungsvarianten, die im Zusammenhang mit der erfindungsgemäßen Transportvorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Transportvorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Transportvorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Transportvorrichtung. Die Transportvorrichtung kann zur Durchführung des Verfahrens gemäß den Ausführungsbeispielen der vorherigen Beschreibung ausgebildet sein bzw. hierzu angepasst sein.

Die Transportvorrichtung kann in Transportrichtung der Artikel vor einer Verpackungsmaschine zum Verpacken der Artikel angeordnet sein oder Teil von dieser sein. Insbesondere kann es sich bei der Verpackungsmaschine um einen Schrumpfpacker oder Kartonpacker handeln, in welchem oder welcher Gruppen der Artikel zumindest bereichsweise mit Schrumpffolie oder mit Karton umhüllt werden. Alternativ kann es sich um eine Verpackungsmaschine handeln, in welcher Artikelgruppen mit Zuschnitten, insbesondere aus Karton oder Papier, miteinander, oder mit Klebeverbindungen untereinander verbunden werden. Alternativ kann es sich bei der Verpackungsmaschine um einen Einsetzer handeln, welcher die Artikel beispielsweise in Kästen einsetzt.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, die erfindungsgemäße Transportvorrichtung typischerweise Teil einer Verpackungsmaschine sein, wobei die Transportvorrichtung zur Bewegung von Artikeln vorgesehen ist, die insbesondere durch Getränkebehälter, Getränkedosen o. dgl. Behälter ausgebildet sein können.

Die erfindungsgemäße Transportvorrichtung kann bspw. einen vorgeordneten ersten Transportabschnitt umfassen, der durch eine Horizontalfördereinrichtung gebildet ist oder eine solche umfasst, wobei über die Horizontalfördereinrichtung die zu befördernden Artikel bzw. Getränkebehälter insbesondere im ungeordneten Massenstrom bewegt werden. Mehrere Artikel bzw. mehrere aufrecht stehend bewegte Getränkebehälter besitzen in einem solchen ungeordneten Massenstrom eine willkürliche Orientierung zueinander und sind normalerweise noch nicht geordnet oder in Reihen geführt.

Die Horizontalfördereinrichtung kann beispielsweise ein Transportband umfassen, auf welchem die Artikel bzw. die Getränkebehälter während des Bewegens im ungeordneten Massenstrom aufstehen.

Im Bereich eines dem ersten Transportabschnitt in Transportrichtung nachgeordneten zweiten Transportabschnittes, welcher ebenso als Bestandteil der Transportvorrichtung ausgebildet ist und sich unmittelbar an den ersten Transportabschnitt anschließen kann, besitzt die Transportvorrichtung gemäß der hier skizzierten Ausführungsvariante mindestens eine weitere Horizontalfördereinrichtung, die ggf. auch dieselbe Horizontalfördereinrichtung sein kann wie die Horizontalfördereinrichtung des ersten Transportabschnittes.

Auch die mindestens eine weitere Horizontalfördereinrichtung kann als Transportband ausgebildet sein. Weiterhin umfasst der zweite Transportabschnitt mehrere Führungen oder Längsführungen, die nachfolgend näher erläutert werden sollen.

Die Führungen oder Längsführungen im zweiten Transportabschnitt fungieren als Abtrennungen und bilden zwischen sich mehrere Gassen aus, in welchen die im Bereich des ersten Transportabschnittes noch im ungeordneten Massenstrom bewegten Artikel eintreten und sodann in parallelen Reihen geführt werden. Eine relative Beabstandung unmittelbar benachbarter Längsführungen ist gegenüber einem maximalen Durchmesser der Artikel etwas vergrößert, so dass die Artikel oder Behälter mit geringem Spiel und ohne zu Kippen zwischen den Längsführungen in Transportrichtung bewegt werden können.

Die parallele Orientierung der Längsführungen, mittels welcher die Artikel bzw. Getränkebehälter in parallelen Reihen bewegt werden können, ist vorliegend lediglich beispielhaft zu verstehen. So können durchaus auch Ausführungsformen existieren, bei welchen die Führungen oder Längsführungen schräg zueinander angestellt sind bzw. bei welchen sich eine relative Beabstandung von benachbarten Führungen zueinander in Transportrichtung vermindert.

Bei aus dem Stand der Technik bekannten Transportvorrichtungen in einer solchen Bauweise besteht häufig das Problem, dass Artikel im Bereich eines in Richtung des ersten Transportabschnittes weisenden Endes einer jeweiligen Führung klemmen, dort in ihrem Transport gehindert sind oder sich ungewollt stauen. Hierdurch können die Reihen an Artikeln, welche zwischen den Führungen oder Längsführungen bewegt werden, Lücken aufweisen, so dass eine nachfolgende Handhabung der in mehreren parallelen Reihen bewegten Artikel mit Problemen verbunden sein kann.

Mittels der erfindungsgemäßen Ausführungsform der Transportvorrichtung, bei welcher mindestens einer Längsführung wenigstens zwei zur Einweisung von Artikeln in Gassen vorgesehene Rollen zugeordnet sind, lässt sich dem Problem eines Klemmens bzw. einer ungewollten Stauung von Artikeln im Bereich eines Endes einer jeweiligen Führung auf einfache Art und Weise entgegenwirken.

Im Bereich des Endes, welcher in der Praxis in Richtung des ersten Transportabschnittes weist, sind sinnvollerweise zwei Rollen angeordnet, die Artikel bzw. Getränkebehälter in eine jeweilige zwischen benachbarten Führungen ausgebildete Gasse einweisen können. Beide Rollen können bspw. mit einem oberen Mitnehmer und einem unteren Mitnehmer in Verbindung stehen, d.h. beide Rollen können bspw. an einen oberen Mitnehmer und an einen unteren Mitnehmer jeweils mechanisch gekoppelt und/ oder dort drehbar gelagert sein.

Beide Mitnehmer bzw. sowohl der obere Mitnehmer als auch der untere Mitnehmer sind jeweils drehbeweglich gelagert, wobei eine Drehachse gebildet ist, die als gemeinsame Drehachse für den oberen Mitnehmer und den unteren Mitnehmer ausgebildet ist.

Zudem sind der obere Mitnehmer und der untere Mitnehmer unabhängig voneinander drehbar. Es besteht somit die Möglichkeit, den oberen Mitnehmer und den unteren Mitnehmer relativ zueinander zu drehen, wobei hierdurch eine schräge Anstellung der im Normalfall parallel zueinander orientierten Rollen bewirkt werden kann.

Tritt ein in Transportrichtung beförderter Artikel oder Getränkebehälter bei einer Bewegung in Richtung einer jeweiligen Führung mit mindestens einer der Rollen in Kontakt, so kann der obere Mitnehmer und/oder der untere Mitnehmer hierdurch gedreht werden, wobei die mindestens eine Rolle den jeweiligen Artikel bzw. den jeweiligen Getränkebehälter in die jeweilige Gasse einweist.

Die Praxis hat gezeigt, dass durch die Anordnung bzw. durch die Befestigung von mindestens zwei Rollen an dem oberen Mitnehmer und dem unteren Mitnehmer mit hoher Sicherheit gewährleitet werden kann, dass ein jeweiliger Artikel bei einem jeweiligen Einweisen in eine jeweilige Gasse nicht ungewollt kippt. Auch werden bei einem Drehen des oberen Mitnehmers und/oder des unteren Mitnehmers Artikel bzw. Getränkebehälter, welche sich in einem Nahbereich der Rollen befinden, voneinander weggedrückt, wodurch eine Stauung von Artikeln im Bereich des Endes auf einfache Art und Weise vermieden werden kann.

Die Rollen können zudem selbst jeweils um eine Achse rotieren, welche entlang ihrer jeweiligen Längsrichtung verläuft. Hierdurch wird ein sicheres Einweisen von Artikeln bzw. von Getränkebehältern in eine jeweilige Gasse weiter verbessert.

Es kann zudem erwähnt werden, dass bei einer vorteilhaften Ausführungsvariante eine Befestigungsstruktur, an welcher die beiden Rollen festgesetzt sind, über Schraubverbindungen oder andere Verankerungen an der jeweiligen Längsführung gehalten wird. Durch Lösen der Schraubverbindungen können somit die Rollen zusammen mit der Befestigungsstruktur von der Führung schnell und unkompliziert entfernt werden. Auch kann die Befestigungsstruktur zusammen mit den Rollen über Schraubverbindungen schnell und einfach an der jeweiligen Führung oder Längsführung angeordnet werden.

Wahlweise kann die Befestigungsstruktur ein oberes Befestigungselement und ein unteres Befestigungselement umfassen. Das obere Befestigungselement und das untere Befestigungselement sind hierbei vorzugsweise über Querstreben miteinander verbunden und besitzen eine parallele oder im Wesentlichen parallele Orientierung. Am oberen Befestigungselement ist der obere Mitnehmer befestigt. Am unteren Befestigungselement ist der untere Mitnehmer befestigt. Die Befestigungselemente können sich zudem in Richtung des jeweiligen hieran angeordneten Mitnehmers verjüngen. Die Drehachse der Mitnehmer verläuft insbesondere zwischen den beiden Rollen, sofern die beiden Rollen parallel zueinander orientiert ausgerichtet sind.

Nachfolgend werden nochmals einige Verfahrensschritte genannt, wie sie in diversen Ausführungsformen des erfindungsgemäßen Verfahrens vorgesehen sein können. Das Verfahren kann mittels einer Transportvorrichtung entsprechend der hier erläuterten Ausführungsformen umgesetzt werden.

Bei dem Verfahren sind mehrere Führungen oder Längsführungen vorgesehen, die zwischen sich mehrere Gassen zur mehrreihigen Bewegung von Artikeln ausbilden. Zudem befinden sich im Bereich eines jeweiligen Endes der Führungen wenigstens zwei Rollen, die an einem oberen Mitnehmer und an einem unteren Mitnehmer befestigt sind. Der obere Mitnehmer und der untere Mitnehmer sind drehbeweglich gelagert.

Im ersten Verfahrensschritt werden Artikel im ungeordneten Massenstrom bewegt. Die Bewegung kann hierbei im Bereich eines ersten Transportabschnittes erfolgen, wie er oben bereits beispielhaft erläutert wurde. Die Bewegung im ungeordneten Massenstrom kann über eine Horizontalfördereinrichtung bzw. über ein Transportband oder aber auch über Staudruck erfolgen.

Im nachfolgenden zweiten Verfahrensschritt gelangt ein Artikel mit mindestens einer Rolle der wenigstens zwei Rollen in Oberflächenkontakt. Hierdurch werden der obere Mitnehmer und der untere Mitnehmer zusammen mit den wenigstens zwei Rollen gedreht und der jeweilige Artikel unter Oberflächenkontakt mit der mindestens einen Rolle in eine jeweilige Gasse eingewiesen.

Im darauffolgenden Schritt werden die in die Gassen eingewiesenen Artikel in mehreren parallelen Reihen bewegt und einer Station zur weiteren Handhabung, wie beispielsweise einer Verpackungsmaschine, zugeführt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsform einer erfindungsgemäßen Transportvorrichtung.
Fig. 2A zeigt einzelne Details der in Fig. 1 gezeigten Ausführungsform der Transportvorrichtung.
Fig. 2B zeigt weitere Details der in Fig. 2A gezeigten Ausführungsform der Transportvorrichtung.
Fig. 3 zeigt einzelne Schritte, wie sie in diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

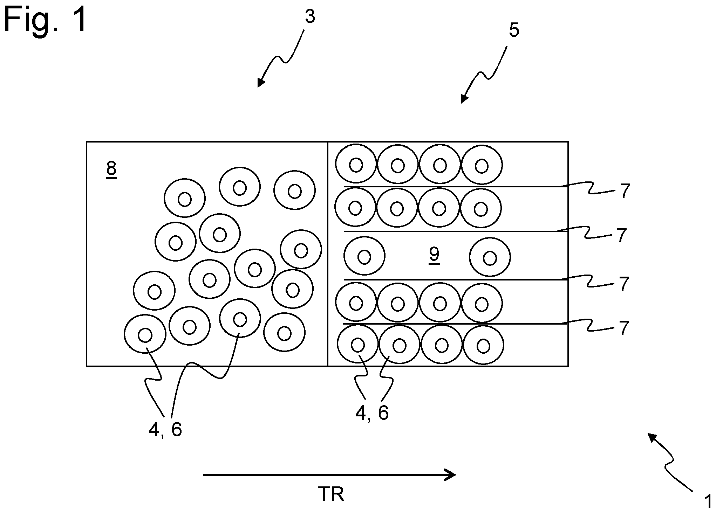

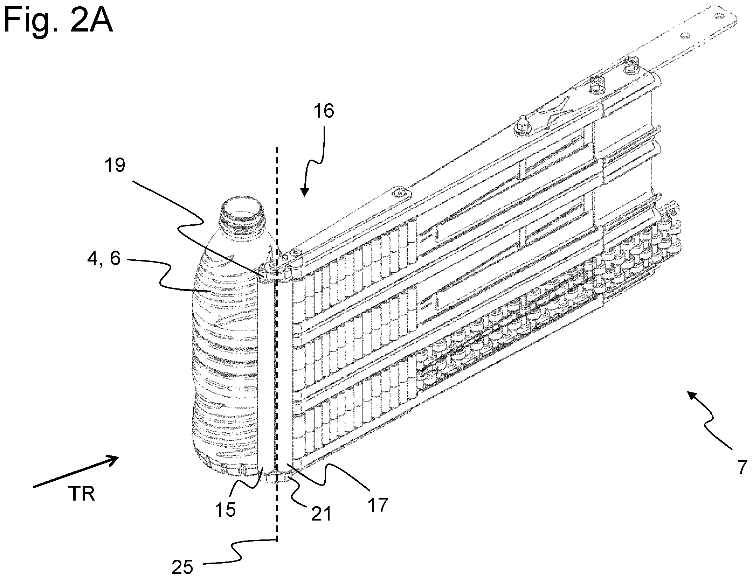

Die schematische Draufsicht der Fig. 1 zeigt eine Ausführungsform einer erfindungsgemäßen Transportvorrichtung 1. Die Transportvorrichtung 1 ist zur Bewegung von Artikeln 4 vorgesehen, die in der gezeigten Draufsicht durch schematisch angedeutete Getränkebehälter 6 ausgebildet sein können (vgl. Fig. 2A). Die Bewegungsrichtung der Artikel 4 bzw. die Transportrichtung TR der Artikel 4 oder Getränkebehälter 6 ist in Fig. 1 durch eine Pfeildarstellung angedeutet.

Die in der Fig. 1 in schematischer Draufsicht gezeigte Transportvorrichtung 1 umfasst einen vorgeordneten ersten Transportabschnitt 3, der eine Horizontalfördereinrichtung 8 umfasst und über die Horizontalfördereinrichtung 8 die zu befördernden Artikel 4 bzw. Getränkebehälter 6 im ungeordneten Massenstrom bewegt. Mehrere Artikel 4 bzw. mehrere aufrecht stehend bewegte Getränkebehälter 6 besitzen in einem solchen ungeordneten Massenstrom eine willkürliche Orientierung zueinander und sind normalerweise noch nicht geordnet oder in Reihen geführt.

Die Horizontalfördereinrichtung 8 kann beispielsweise ein Transportband umfassen, auf welchem die Artikel 4 bzw. die Getränkebehälter 6 während des Bewegens im ungeordneten Massenstrom aufstehen.

Im Bereich eines dem ersten Transportabschnitt 3 in Transportrichtung TR nachgeordneten zweiten Transportabschnittes 5, welcher ebenso als Bestandteil der Transportvorrichtung 1 ausgebildet ist und sich in der in Fig. 1 gezeigten Weise unmittelbar an den ersten Transportabschnitt 3 anschließt, besitzt die Transportvorrichtung 1 mindestens eine weitere Horizontalfördereinrichtung 9, die ggf. auch dieselbe Horizontalfördereinrichtung sein kann wie die Horizontalfördereinrichtung 8 des ersten Transportabschnittes 3.

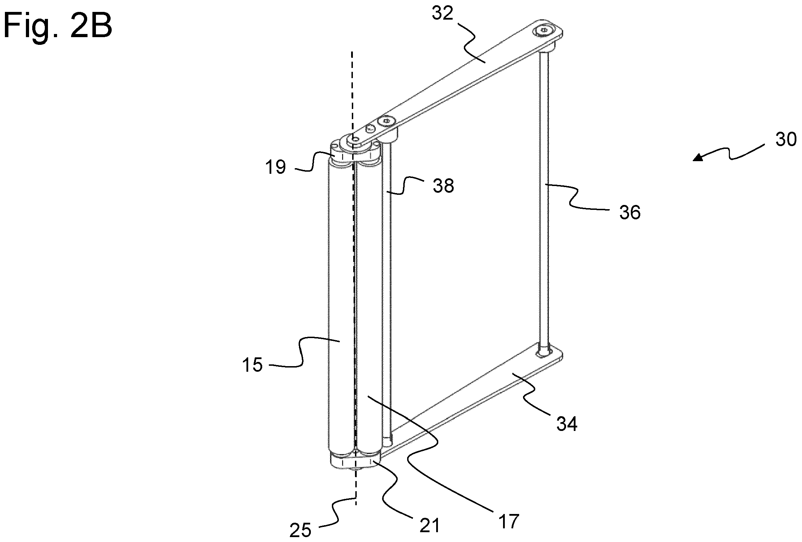

Auch die mindestens eine weitere Horizontalfördereinrichtung 9 kann als Transportband ausgebildet sein. Wie die Fig. 1 dies erkennen lässt, umfasst der zweite Transportabschnitt 5 mehrere Führungen 7 oder Längsführungen 7, die in Fig. 1 lediglich schematisch dargestellt sind und in Fig. 2A und in Fig. 2B etwas detaillierter gezeigt werden.

Die Führungen 7 oder Längsführungen 7 fungieren als Abtrennungen und bilden zwischen sich mehrere Gassen aus, in welchen die im Bereich des ersten Transportabschnittes 3 noch im ungeordneten Massenstrom bewegten Artikel 4 eintreten und sodann in parallelen Reihen geführt werden. Eine relative Beabstandung unmittelbar benachbarter Längsführungen 7 ist gegenüber einem maximalen Durchmesser der Artikel 4 etwas vergrößert, so dass die Artikel 4 oder Behälter 6 mit geringem Spiel und ohne zu Kippen zwischen den Längsführungen 7 in Transportrichtung TR bewegt werden können.

Die parallele Orientierung der Längsführungen 7, mittels welcher die Artikel 4 bzw. Getränkebehälter 6 in parallelen Reihen bewegt werden können, ist vorliegend lediglich beispielhaft zu verstehen. So können durchaus auch Ausführungsformen existieren, bei welchen die Führungen 7 oder Längsführungen 7 schräg zueinander angestellt sind bzw. bei welchen sich eine relative Beabstandung von benachbarten Führungen 7 zueinander in Transportrichtung TR vermindert.

Bei aus dem Stand der Technik bekannten Transportvorrichtungen besteht häufig das Problem, dass Artikel 4 im Bereich eines in Richtung des ersten Transportabschnittes 3 weisenden Endes einer jeweiligen Führung 7 klemmen, dort in ihrem Transport gehindert sind oder sich ungewollt stauen. Hierdurch können die Reihen an Artikeln 4, welche zwischen den Führungen 7 oder Längsführungen 7 bewegt werden, Lücken aufweisen, so dass eine nachfolgende Handhabung der in mehreren parallelen Reihen bewegten Artikel 4 mit Problemen verbunden sein kann.

Mittels der erfindungsgemäßen und in den Figuren 2A und 2B beispielhaft dargestellten Ausführungsform, bei welcher mindestens einer Längsführung 7 wenigstens zwei zur Einweisung von Artikeln 4 in Gassen vorgesehene Rollen 15, 17 zugeordnet sind, lässt sich dem Problem eines Klemmens bzw. einer ungewollten Stauung von Artikeln 4 im Bereich eines Endes 16 (vgl. Fig. 2A) einer jeweiligen Führung 7 auf einfache Art und Weise entgegenwirken.

Die perspektivische Ansicht der Fig. 2A zeigt somit einzelne Details der Ausführungsform der Transportvorrichtung 1 gemäß Fig. 1. Insbesondere zeigt die Fig. 2A den Bereich eines Endes 16 einer jeweiligen Längsführung 7, die in Fig. 1 lediglich schematisch dargestellt bzw. angedeutet sind.

Im Bereich des Endes 16, welcher in der Praxis in Richtung des ersten Transportabschnittes 3 weist, sind vorliegend zwei Rollen 15, 17 angeordnet, die Artikel 4 bzw. Getränkebehälter 6 in eine jeweilige zwischen benachbarten Führungen 7 ausgebildete Gasse einweisen können. Die Darstellung der Fig. 2A lässt erkennen, dass beide Rollen 15 und 17 mit einem oberen Mitnehmer 19 und einem unteren Mitnehmer 21 in Verbindung stehen bzw. dass beide Rollen 15 und 17 an einen oberen Mitnehmer 19 und an einen unteren Mitnehmer 21 jeweils mechanisch gekoppelt sind.

Beide Mitnehmer 19 und 21 bzw. sowohl der obere Mitnehmer 19 als auch der untere Mitnehmer 21 sind jeweils drehbeweglich gelagert, wobei in Fig. 2A die dort erkennbare Drehachse mit der Bezugsziffer 25 bezeichnet ist. Die Drehachse 25 ist als gemeinsame Drehachse für den oberen Mitnehmer 19 und den unteren Mitnehmer 21 ausgebildet.

Zudem sind der obere Mitnehmer 19 und der untere Mitnehmer 21 unabhängig voneinander drehbar. Es besteht somit die Möglichkeit, den oberen Mitnehmer 19 und den unteren Mitnehmer 21 relativ zueinander zu drehen, wobei hierdurch eine schräge Anstellung der in Fig. 2A noch parallel zueinander orientierten Rollen 15 und 17 bewirkt werden kann.

Tritt ein in Transportrichtung TR (vgl. Fig. 2A) beförderter Artikel 4 oder Getränkebehälter 6 bei einer Bewegung in Richtung einer jeweiligen Führung 7 mit mindestens einer der Rollen 15 und/oder 17 in Kontakt, so kann der obere Mitnehmer und/oder der untere Mitnehmer 19 bzw. 21 hierdurch gedreht werden, wobei die mindestens eine Rolle 15 und/oder 17 den jeweiligen Artikel 4 bzw. den jeweiligen Getränkebehälter 6 in die jeweilige Gasse einweist.

Die Praxis hat gezeigt, dass durch die Anordnung bzw. durch die Befestigung von mindestens zwei Rollen 15 und 17 an dem oberen Mitnehmer 19 und dem unteren Mitnehmer 21 mit hoher Sicherheit gewährleitet werden kann, dass ein jeweiliger Artikel 4 bei einem jeweiligen Einweisen in eine jeweilige Gasse nicht ungewollt kippt. Auch werden bei einem Drehen des oberen Mitnehmers 19 und/oder des unteren Mitnehmers 21 Artikel 4 bzw. Getränkebehälter 6, welche sich in einem Nahbereich der Rollen 15 und 17 befinden, voneinander weggedrückt, wodurch eine Stauung von Artikeln 4 im Bereich des Endes 16 auf einfache Art und Weise vermieden werden kann.

Die Rollen 15 und 17 können zudem selbst jeweils um eine Achse rotieren, welche entlang ihrer jeweiligen Längsrichtung verläuft. Hierdurch wird ein sicheres Einweisen von Artikeln 4 bzw. von Getränkebehältern 6 in eine jeweilige Gasse weiter verbessert.

Die Fig. 2A verdeutlicht auch, dass eine Befestigungsstruktur 30 (vgl. Fig. 2B), an welcher die beiden Rollen 15 und 17 festgesetzt sind, über Schraubverbindungen 22 an der jeweiligen Längsführung 7 gehalten wird. Durch Lösen der Schraubverbindungen 22 können somit die Rollen 15 und 17 zusammen mit der Befestigungsstruktur 30 von der Führung 7 schnell und unkompliziert entfernt werden. Auch kann die Befestigungsstruktur 30 zusammen mit den Rollen 15 und 17 über Schraubverbindungen 22 schnell und einfach an der jeweiligen Führung 7 oder Längsführung 7 angeordnet werden.

Die Befestigungsstruktur 30 ist zusammen mit den hieran befestigten Rollen 15 und 17 in Fig. 2B in detaillierter Form verdeutlicht und deshalb im Detail zu erkennen.

Entsprechend Fig. 2B umfasst die Befestigungsstruktur 30 ein oberes Befestigungselement 32 und ein unteres Befestigungselement 34. Das obere Befestigungselement 32 und das untere Befestigungselement 34 sind über Querstreben 36 und 38 miteinander verbunden und besitzen eine parallele oder im Wesentlichen parallele Orientierung. Am oberen Befestigungselement 32 ist der obere Mitnehmer 19 befestigt. Am unteren Befestigungselement 34 ist der untere Mitnehmer 21 befestigt. Die Befestigungselemente 32 und 34 verjüngen sich zudem in Richtung des jeweiligen hieran angeordneten Mitnehmers 19 bzw. 21. Die Drehachse 25 der Mitnehmer 19 und 21 ist auch in Fig. 2B angedeutet. Wie dies die Fig. 2B zeigt, verläuft die Drehachse 25 zwischen den beiden Rollen 15 und 17, sofern die beiden Rollen 15 und 17 parallel zueinander orientiert ausgerichtet sind.

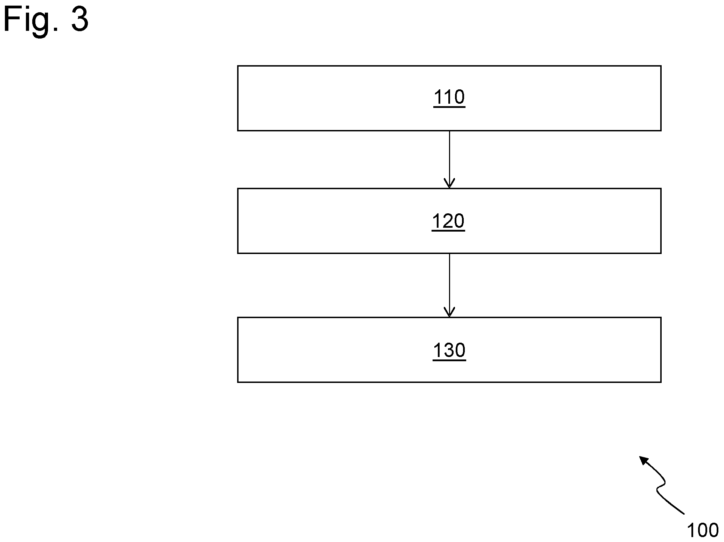

Die Fig. 3 zeigt schließlich einzelne Schritte, wie sie in diversen Ausführungsformen des erfindungsgemäßen Verfahrens 100 vorgesehen sein können. Das Verfahren 100 gemäß der Ausführungsform nach Fig. 3 kann mittels einer Transportvorrichtung 1 entsprechend der Ausführungsform nach Figuren 1 bis 2B umgesetzt werden.

Bei dem Verfahren 100 sind mehrere Führungen 7 oder Längsführungen 7 vorgesehen, die zwischen sich mehrere Gassen zur mehrreihigen Bewegung von Artikeln 4 ausbilden. Zudem befinden sich im Bereich eines jeweiligen Endes 16 der Führungen 7 wenigstens zwei Rollen 15, 17, die an einem oberen Mitnehmer 19 und an einem unteren Mitnehmer 21 befestigt sind. Der obere Mitnehmer 19 und der untere Mitnehmer 21 sind drehbeweglich gelagert.

Im Schritt 110 werden Artikel 4 im ungeordneten Massenstrom bewegt. Die Bewegung kann hierbei im Bereich eines ersten Transportabschnittes 3 erfolgen, wie er in Fig. 1 schematisch dargestellt wurde. Die Bewegung im ungeordneten Massenstrom kann über eine Horizontalfördereinrichtung 8 bzw. über ein Transportband oder aber auch über Staudruck erfolgen.

Im Schritt 120 gelangt ein Artikel 4 mit mindestens einer Rolle 15, 17 der wenigstens zwei Rollen 15, 17 in Oberflächenkontakt. Hierdurch werden der obere Mitnehmer 19 und der untere Mitnehmer 21 zusammen mit den wenigstens zwei Rollen 15, 17 gedreht und der jeweilige Artikel 4 unter Oberflächenkontakt mit der mindestens einen Rolle 15, 17 in eine jeweilige Gasse eingewiesen.

Im Schritt 130 werden die in die Gassen eingewiesenen Artikel 4 in mehreren parallelen Reihen bewegt und einer Station zur weiteren Handhabung, wie beispielsweise einer Verpackungsmaschine, zugeführt.

Abschließend sei auf Folgendes hingewiesen: wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Transportvorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Transportvorrichtung
- 3: erster Transportabschnitt
- 4: Artikel
- 5: zweiter Transportabschnitt
- 6: Getränkebehälter
- 7: Führung, Längsführung
- 8: Horizontalfördereinrichtung
- 9: Horizontalfördereinrichtung
- 15: Rolle
- 16: Ende
- 17: Rolle
- 19: Mitnehmer, oberer Mitnehmer
- 21: Mitnehmer, unterer Mitnehmer
- 25: Drehachse

- 30: Befestigungsstruktur
- 32: oberes Befestigungselement
- 34: unteres Befestigungselement
- 36: Querstrebe
- 38: Querstrebe
- 100: Verfahren
- 110: erster Verfahrensschritt
- 120: zweiter Verfahrensschritt
- 130: dritter Verfahrensschritt

- TR: Transportrichtung, Förderrichtung, Bewegungsrichtung

## Patentansprüche

1. Transportvorrichtung (1) für Artikel (4) wie Getränkebehälter (6) oder dergleichen, umfassend zumindest
- einen ersten Transportabschnitt (3), der zur Bewegung von Artikeln (4) im ungeordneten Massenstrom in einer Transportrichtung (TR) ausgebildet ist, sowie
- einen sich in Transportrichtung (TR) an den ersten Transportabschnitt (3) anschließenden und mehrere Längsführungen (7) umfassenden zweiten Transportabschnitt (5), welche Längsführungen (7) den zweiten Transportabschnitt quer zur Transportrichtung (TR) in mehrere Gassen unterteilen, wodurch die im ersten Transportabschnitt (3) im ungeordneten Massenstrom bewegten Artikel (4) innerhalb des zweiten Transportabschnittes (5) in mehreren, insbesondere parallelen Reihen geführt werden können,
- **dadurch gekennzeichnet, dass** mindestens einer der mehreren Längsführungen (7) wenigstens zwei zur Einweisung von Artikeln (4) in die Gassen des zweiten Transportabschnittes (5) vorgesehene und insbesondere drehbeweglich gelagerte Rollen (15, 17) zugeordnet sind, die jeweils im Bereich eines in Richtung des ersten Transportabschnittes (3) weisenden Endes der jeweiligen Längsführung (7) angeordnet sind,
- und wobei die mindestens zwei Rollen (15, 17) an wenigstens einem gemeinsamen Mitnehmer (19, 21) befestigt und/oder drehbeweglich gelagert sind, der wiederum drehbeweglich an der Längsführung (7) gelagert ist.

2. Transportvorrichtung nach Anspruch 1, bei welcher die wenigstens zwei zur Einweisung von Artikeln (4) in Gassen vorgesehenen Rollen (15, 17) um ihre jeweilige Längsachse rotierbar an dem wenigstens einen gemeinsamen Mitnehmer (19, 21) befestigt und gelagert sind.

3. Transportvorrichtung nach Anspruch 1 oder 2, umfassend einen oberen gemeinsamen Mitnehmer (19) sowie einen unteren gemeinsamen Mitnehmer (21), die relativ zueinander gedreht werden können, wobei die wenigstens zwei zur Einweisung von Artikeln (4) in Gassen vorgesehenen Rollen (15, 17) an dem oberen gemeinsamen Mitnehmer (19) und an dem unteren gemeinsamen Mitnehmer (21) derart befestigt sind, dass die wenigstens zwei zur Einweisung von Artikeln (4) in Gassen vorgesehenen Rollen (15, 17) mittels einer relativen Drehbewegung des oberen gemeinsamen Mitnehmers (19) gegenüber dem unteren gemeinsamen Mitnehmer (21) aus einer parallelen oder im Wesentlichen parallelen Orientierung schräg zueinander anstellbar sind.

4. Transportvorrichtung nach Anspruch 3, bei welcher der obere gemeinsame Mitnehmer (19) und der untere gemeinsame Mitnehmer (21) jeweils drehbeweglich gelagert sind.

5. Transportvorrichtung nach einem der Ansprüche 1 bis 4, bei welcher das in Richtung des ersten Transportabschnittes (3) weisende Ende der mindestens einen Längsführung (7) eine sich in Richtung des ersten Transportabschnittes (3) verjüngende Spitze ausbildet, wobei die wenigstens zwei zur Einweisung von Artikeln (4) vorgesehenen Rollen (15, 17) im Bereich eines Endes der sich in Richtung des ersten Transportabschnittes (3) verjüngenden Spitze angeordnet sind.

6. Transportvorrichtung nach einem der Ansprüche 1 bis 5, bei welcher mindestens einer der mehreren Längsführungen (7) drei oder mehr zur Einweisung von Artikeln (4) in Gassen vorgesehene Rollen (15, 17) zugeordnet sind, die jeweils im Bereich eines in Richtung des ersten Transportabschnittes (3) weisenden Endes der jeweiligen Längsführung (7) angeordnet sind und jeweils an wenigstens einem gemeinsamen Mitnehmer (19, 21) befestigt sind, welcher wenigstens eine gemeinsame Mitnehmer (19, 21) drehbeweglich gelagert ist.

7. Verfahren (100) zum Transportieren von Artikeln (4) wie Getränkebehälter (6) oder dergleichen, bei welchem Verfahren (100) mehrere Längsführungen (7) vorgesehen sind, die zwischen sich mehrere Gassen zur mehrreihigen Bewegung von Artikeln (4) ausbilden, welches Verfahren (100) zumindest die folgenden Schritte umfasst:
- Bewegen von Artikeln (4) im ungeordneten Massenstrom und
- Zuführen der bis dahin im ungeordneten Massenstrom bewegten Artikel (4) an die mehreren Gassen sowie hierauf folgend Bewegen der den mehreren Gassen zugeführten Artikel (4) in den mehreren Gassen in mehreren vorzugsweise parallelen Reihen,
- wobei sich im Bereich eines Endes (16) mindestens einer der Längsführungen (7) wenigstens zwei Rollen (15, 17) befinden, die an wenigstens einem gemeinsamen Mitnehmer (19, 21) befestigt und insbesondere drehbeweglich gelagert sind, welcher wenigstens eine gemeinsame Mitnehmer (19, 21) wiederum an der Längsführung (7) drehbeweglich gelagert ist, wobei ein bis dahin noch im ungeordneten Massenstrom bewegter Artikel (4) mit mindestens einer Rolle (15, 17) der wenigstens zwei Rollen (15, 17) in Oberflächenkontakt gelangt, wodurch der wenigstens eine gemeinsame Mitnehmer (19, 21) zusammen mit den wenigstens zwei Rollen (15, 17) gedreht wird und der jeweilige Artikel (4) unter Oberflächenkontakt mit der mindestens einen Rolle (15, 17) in eine von mehreren durch die Längsführungen (7) gebildeten Gassen eingewiesen wird.

8. Verfahren nach Anspruch 7, bei welchem der bis dahin noch im ungeordneten Massenstrom bewegte Artikel (4) mit mindestens einer Rolle (15, 17) der wenigstens zwei Rollen (15, 17) in Oberflächenkontakt gelangt, wodurch der wenigstens eine gemeinsam Mitnehmer (19, 21) zusammen mit den wenigstens zwei Rollen (15, 17) gedreht wird, die mindestens eine Rolle (15, 17) der wenigstens zwei Rollen (15, 17) um ihre Längsachse rotierend bewegt wird und der jeweilige Artikel (4) unter Oberflächenkontakt mit der mindestens einen Rolle (15, 17) in eine jeweilige Gasse eingewiesen wird.

9. Verfahren nach Anspruch 7 oder 8, bei welchem der bis dahin noch im ungeordneten Massenstrom bewegte Artikel (4) mit mindestens einer Rolle (15, 17) der wenigstens zwei Rollen (15, 17) in Oberflächenkontakt gelangt, wodurch der wenigstens eine gemeinsame Mitnehmer (19, 21) zusammen mit den wenigstens zwei Rollen (15, 17) gedreht wird, woraus resultierend die wenigstens zwei Rollen (15, 17) ausgehend von einer parallelen oder im Wesentlichen parallelen Orientierung schräg zueinander angestellt werden und der jeweilige Artikel (4) unter Oberflächenkontakt mit der mindestens einen schräg angestellten Rolle (15, 17) in eine jeweilige Gasse eingewiesen wird.

10. Verfahren nach einem der Ansprüche 7 bis 9, bei welchem sich im Bereich eines Endes (16) mindestens einer der mehreren Längsführungen (7) wenigstens drei Rollen (15, 17) befinden, die an wenigstens einem gemeinsamen Mitnehmer (19, 21) befestigt sind, wobei ein bis dahin noch im ungeordneten Massenstrom bewegter Artikel (4) mit mindestens einer der wenigstens drei Rollen (15, 17) in Oberflächenkontakt gelangt, wodurch der wenigstens eine gemeinsame Mitnehmer (19, 21) zusammen mit den wenigstens drei Rollen (15, 17) gedreht wird und der jeweilige Artikel (4) unter Oberflächenkontakt mit der mindestens einen Rolle (15, 17) in eine jeweilige Gasse eingewiesen wird.

## Claims

1. A transport device (1) for items (4), such as beverage containers (6) or the like, the transport device (1) comprising at least
- a first transport section (3), which is configured to move items (4) in a disordered mass flow in a transport direction (TR), as well as
- a second transport section (5) subsequent in transport direction (TR) to the first transport section (3), the second transport section (5) comprising a plurality of longitudinal guides (7), which longitudinal guides (7) subdivide the second transport section transversely to the transport direction (TR) into a plurality of lanes, whereby the items (4) being moved in the disordered mass flow in the first transport section (3) can be guided in a plurality of, in particular, parallel rows within the second transport section (5),
**characterised in that** at least one of the plurality of longitudinal guides (7) is assigned at least two, in particular, rotationally mounted rollers (15, 17), which are provided to guide items (4) into the lanes of the second transport section (5), and which are in each instance arranged in the region of an end of the particular longitudinal guide (7) facing toward the first transport section (3),
- and wherein the at least two rollers (15, 17) are fastened and/or rotationally mounted to at least one joint driving member (19, 21), which is in turn rotationally mounted to the longitudinal guide (7).

2. The transport device according to claim 1, in which the at least two rollers (15, 17), which are provided to guide items (4) into lanes, are fastened and mounted to the at least one joint driving member (19, 21) so as to be rotatable about their particular longitudinal axis.

3. The transport device according to claim 1 or 2, comprising a joint upper driving member (19), as well as a joint lower driving member (21), which can be rotated relative to each other, wherein the at least two rollers (15, 17), which are provided to guide items (4) into lanes, are mounted to the joint upper driving member (19) and to the joint lower driving member (21) in such a manner that the at least two rollers (15, 17), which are provided to guide items (4) into lanes, can be set from a parallel or a substantially parallel orientation to an orientation at an angle to one another by means of a relative rotary movement of the joint upper driving member (19) relative to the joint lower driving member (21).

4. The transport device according to claim 3, in which the joint upper driving member (19) and the joint lower driving member (21) are each rotationally mounted.

5. The transport device according to one of the claims 1 to 4, in which the end of the at least one longitudinal guide (7) facing toward the first transport section (3) forms a point that tapers toward the first transport section (3), wherein the at least two rollers (15, 17), which are provided to guide items (4) into lanes, are arranged in the region of an end of the point that tapers toward the first transport section (3).

6. The transport device according to one of the claims 1 to 5, in which at least one of the plurality of longitudinal guides (7) is assigned three or more rollers (15, 17), which are provided to guide items (4) into lanes, and which are in each instance arranged in the region of an end of the particular longitudinal guide (7) facing toward the first transport section (3), and which are in each instance fastened to at least one joint driving member (19, 21), which at least one joint driving member (19, 21) is rotationally mounted.

7. A method (100) for the transport of items (4), such as beverage containers (6) or the like, in which method (100) a plurality of longitudinal guides (7) are provided, between which a plurality of lanes are formed for the multi-row movement of items (4), the method (100) comprising at least the following steps:
- moving items (4) in a disordered mass flow, and
- feeding the items (4), which were up to then being moved in the disordered mass flow, into the plurality of lanes, and subsequently moving the items (4), which have been fed to the plurality of lanes, in the plurality of lanes in a plurality of preferably parallel rows,
- wherein at least two rollers (15, 17) are located in the region of an end (16) of at least one of the longitudinal guides (7), which at least two rollers (15, 17) are fastened and, in particular, rotationally mounted to at least one joint driving member (19, 21), which at least one joint driving member (19, 21) is in turn rotationally mounted to the longitudinal guide (7), wherein an item (4), which was up to then still being moved in the disordered mass flow, comes into surface contact with at least one roller (15, 17) of the at least two rollers (15, 17), whereby the at least one joint driving member (19, 21) is rotated together with the at least two rollers (15, 17), and the particular item (4) is guided under surface contact with the at least one roller (15, 17) into one of a plurality of lanes formed by the longitudinal guides (7).

8. The method according to claim 7, in which the item (4), which was up to then still being moved in the disordered mass flow, comes into surface contact with at least one roller (15, 17) of the at least two rollers (15, 17), whereby the at least one joint driving member (19, 21) is rotated together with the at least two rollers (15, 17), the at least one roller (15, 17) of the at least two rollers (15, 17) is moved about its rotating longitudinal axis, and the particular item (4) is guided under surface contact with the at least one roller (15, 17) into a particular lane.

9. The method according to claim 7 or 8, in which the item (4), which was up to then still being moved in the disordered mass flow, comes into surface contact with at least one roller (15, 17) of the at least two rollers (15, 17), whereby the at least one joint driving member (19, 21) is rotated together with the at least two rollers (15, 17), with the result that the at least two rollers (15, 17) are set from a parallel or a substantially parallel orientation to an orientation at an angle to one another, and the particular item (4) is guided under surface contact with the at least one roller (15, 17), which is set at an angle, into a particular lane.

10. The method according to one of the claims 7 to 9, in which at least three rollers (15, 17) are located in the region of an end (16) of at least one of the plurality of longitudinal guides (7), which rollers (15, 17) are fastened to at least one joint driving member (19, 21), wherein an item (4), which was up to then still being moved in the disordered mass flow, comes into surface contact with at least one of the at least three rollers (15, 17), whereby the at least one joint driving member (19, 21) is rotated together with the at least three rollers (15, 17), and the particular item (4) is guided under surface contact with the at least one roller (15, 17) into a particular lane.

## Revendications

1. Dispositif de transport (1) pour des articles (3), tels que récipients à boisson (5) ou similaires, comprenant au moins
- une première section de transport (3) qui est conçue pour déplacer des articles (4) dans un flux de masse non ordonné suivant une direction de transport (TR), ainsi qu'
- une deuxième section de transport (5) qui est contiguë à la première section de transport (3) dans la direction de transport (TR) et comprend une pluralité de guides longitudinaux (7), lesquels guides longitudinaux (7) divisent la deuxième section de transport en plusieurs ruelles transversalement à la direction de transport (TR), ce par quoi les articles (4) déplacés dans un flux de masse non ordonné dans la première section de transport (3) peuvent être guidés à l'intérieur de la deuxième section de transport (5) en plusieurs rangées, en particulier parallèles,
**caractérisé par le fait qu'**à au moins l'un de la pluralité de guides longitudinaux (7) sont associés au moins deux rouleaux (15, 17) qui sont prévus pour introduire des articles (4) dans les ruelles de la deuxième section de transport (5) et, en particulier, sont montés de manière à être mobiles en rotation et qui sont disposés chacun au niveau d'une extrémité du guide longitudinal (7) respectif laquelle montre en direction de la première section de transport (3),
- et dans lequel lesdits au moins deux rouleaux (15, 17) sont fixés et/ou montés de manière mobile en rotation sur au moins un entraîneur (19, 21) commun qui, à son tour, est monté de manière mobile en rotation sur le guide longitudinal (7).

2. Dispositif de transport selon la revendication 1, dans lequel lesdits au moins deux rouleaux (15, 17) prévus pour introduire des articles (4) dans des ruelles sont fixés et montés sur ledit au moins un entraîneur (19, 21) commun de manière à être rotatifs autour de leur axe longitudinal respectif.

3. Dispositif de transport selon la revendication 1 ou 2, comprenant un entraîneur commun supérieur (19) ainsi qu'un entraîneur commun inférieur (21) qui peuvent être tournés l'un par rapport à l'autre, dans lequel lesdits au moins deux rouleaux (15, 17) prévus pour introduire des articles (4) dans des ruelles sont fixés à l'entraîneur commun supérieur (19) et à l'entraîneur commun inférieur (21) de telle manière que lesdits au moins deux rouleaux (15, 17) prévus pour introduire des articles (4) dans des ruelles peuvent être placés, à partir d'une orientation parallèle ou pour l'essentiel parallèle, de manière à être inclinés les uns par rapport aux autres au moyen d'un mouvement rotatif relatif de l'entraîneur commun supérieur (19) par rapport à l'entraîneur commun inférieur (21).

4. Dispositif de transport selon la revendication 3, dans lequel l'entraîneur commun supérieur (19) et l'entraîneur commun inférieur (21) sont montés chacun de manière mobile en rotation.

5. Dispositif de transport selon l'une quelconque des revendications 1 à 4, dans lequel l'extrémité dudit au moins un guide longitudinal (7) laquelle montre en direction de la première section de transport (3) forme une pointe se rétrécissant en direction de la première section de transport (3), dans lequel lesdits au moins deux rouleaux (15, 17) prévus pour introduire des articles (4) sont disposés au niveau d'une extrémité de ladite pointe se rétrécissant en direction de la première section de transport (3).

6. Dispositif de transport selon l'une quelconque des revendications 1 à 5, dans lequel à au moins l'un de la pluralité de guides longitudinaux (7) sont associé trois ou plusieurs rouleaux (15, 17) qui sont prévus pour introduire des articles (4) dans des ruelles et qui sont disposés chacun au niveau d'une extrémité du guide longitudinal (7) respectif laquelle montre en direction de la première section de transport (3) et sont fixés chacun à au moins un entraîneur (19, 21) commun, lequel au moins un entraîneur (19, 21) commun est monté de manière mobile en rotation.

7. Procédé (100) de transport d'articles (4) tels que des récipients à boisson (6) ou similaires, dans lequel procédé (100) plusieurs guides longitudinaux (7) sont prévus qui forment entre eux plusieurs ruelles de déplacement d'articles (4) en plusieurs rangées, lequel procédé (100) comprend au moins les étapes suivantes consistant à:
- déplacer des articles (4) dans un flux de masse non ordonné et
- amener les articles (4) qui, jusque-là, sont déplacés dans un flux de masse non ordonné, à la pluralité de ruelles, et, puis, déplacer les articles (4) amenés à la pluralité de ruelles dans lesdites plusieurs ruelles en plusieurs rangées, de préférence parallèles,
- dans lequel au moins deux rouleaux (15, 17) se trouvent au niveau d'une extrémité (16) d'au moins l'un des guides longitudinaux (7), qui sont fixés à au moins un entraîneur commun (19, 21) et, en particulier, sont montés de manière mobile en rotation, lequel au moins un entraîneur commun (19, 21) est à son tour monté de manière mobile en rotation sur le guide longitudinal (7), dans lequel un article (4) qui est déplacé jusque-là encore dans un flux de masse non ordonné entre en contact de surface avec au moins un rouleau (15, 17) desdits au moins deux rouleaux (15, 17), ce par quoi ledit au moins un entraîneur commun (19, 21) est tourné conjointement avec lesdits au moins deux rouleaux (15, 17), et l'article (4) respectif est introduit, en étant en contact de surface avec ledit au moins un rouleau (15, 17), dans l'une de plusieurs ruelles formées par les guides longitudinaux (7).

8. Procédé selon la revendication 7, dans lequel l'article (4) qui jusque-là est encore déplacé dans un flux de masse non ordonné vient en contact de surface avec au moins un rouleau (15, 17) desdits au moins deux rouleaux (15, 17) ce par quoi ledit au moins un entraîneur (19, 21) commun est tourné conjointement avec lesdits au moins deux rouleaux (15, 17), ledit au moins un rouleau (15, 17) desdits au moins deux rouleaux (15, 17) est déplacé en rotation autour de son axe longitudinal et l'article (4) respectif est introduit dans une ruelle respective en étant en contact de surface avec ledit au moins un rouleau (15, 17).

9. Procédé selon la revendication 7 ou 8, dans lequel l'article (4) qui jusque-là est encore déplacé dans un flux de masse non ordonné vient en contact de surface avec au moins un rouleau (15, 17) desdits au moins deux rouleaux (15, 17) ce par quoi ledit au moins un entraîneur (19, 21) commun est tourné conjointement avec lesdits au moins deux rouleaux (15, 17), ce qui a pour conséquence que lesdits au moins deux rouleaux (15, 17) peuvent être placés, à partir d'une orientation parallèle ou pour l'essentiel parallèle, de manière à être inclinés les uns par rapport aux autres et l'article (4) respectif est introduit dans une ruelle respective en étant en contact de surface avec ledit au moins un rouleau (15, 17) incliné.

10. Procédé selon l'une quelconque des revendications 7 à 9, dans lequel au moins trois rouleaux (15, 17) sont situés au niveau d'une extrémité (16) d'au moins l'un de la pluralité de guides longitudinaux (7), qui sont fixés à au moins un entraîneur commun (19, 21), dans lequel un article (4) qui jusque-là est déplacé encore dans un flux de masse non ordonné vient en contact de surface avec au moins l'un desdits au moins trois rouleaux (15, 17) ce par quoi ledit au moins un entraîneur commun (19, 21) est tourné conjointement avec lesdits au moins trois rouleaux (15, 17) et l'article respectif (4) est introduit dans une ruelle respective en étant en contact de surface avec ledit au moins un rouleau (15, 17).
